# EUROPÄISCHE PATENTANMELDUNG

(11) **EP 2 348 086 A1**
(43) Veröffentlichungstag der Anmeldung: **27.07.2011**
(21) Anmeldenummer: 11150032.8
(22) Anmeldetag: 03.01.2011
(51) Int. Cl.: C09J 175/04, C08K 3/00, E06B 5/16

(54) **Mehrkomponentenklebstoff zur Herstellung von Feuerschutztüren, damit versehene Feuerschutztür sowie Herstellverfahren**

(30) Priorität: 20.01.2010 DE 102010005371; 26.01.2010 DE 102010005732; 21.05.2010 DE 102010021285
(71) Anmelder: Hörmann KG Brandis, 04821 Brandis (DE)
(72) Erfinder: Rentsch, Manfred, 04827 Machern (DE)
(74) Vertreter: Kastel, Stefan

(57) **Zusammenfassung**

Ein Mehrkomponentenkleber (10) zur Herstellung von Feuerschutzabschlüssen (12), insbesondere Feuerschutztüren (14), enthält wenigstens eine Klebstoffkomponente, insbesondere einen 1-K- oder 2-K-PU-Klebstoff (24, 34), dem eine im Brandfall kühlende Substanz (22) beigemischt ist. Die beizumischende Substanz (22) weist einen Mengenanteil von maximal 50% auf und ist aus einer Gruppe, die Aluminiumhydroxid (26), Magnesiumhydroxid (36) und Kieselsäure (38) enthält, ausgewählt.

## Beschreibung

Die Erfindung betrifft einen Mehrkomponentenklebstoff zur Herstellung einer Feuerschutztür, eine damit verklebte Feuerschutztür sowie ein Herstellverfahren für den Kleber sowie die Feuerschutztür.

Es sind bereits Feuerschutztüren auf dem Markt, bei denen Einzelteile mittels eines Klebstoffes verklebt sind. Denkbar ist dabei die Nutzung von Wasserglasklebstoffsystemen oder die Verwendung von 1-K-PU (Einkomponenten-Polyurethan)-Klebstoffen oder 2-K-PU (Zweikomponenten-Polyurethan)-Klebstoffen.

Wasserglasklebstoffe sind Klebstoffe auf der Basis von Wasserglas, d.h. Natrium-oder Kaliumsilikaten, die ein Kühlpotential haben, wobei sich das erstarrte Wasserglas bei hohen Temperaturen ab etwa 150°C verflüssigt. Wasserglasklebstoffsysteme haben jedoch den Nachteil, dass sie in der Fertigung nicht geeignet sind, da insbesondere z.B. bei Pulver-Lackierverfahren oder bei Blechumformungen durch Reibung oder angelegte Spannungen Temperaturen entstehen, die an die Maximaltemperatur, bis zu der Wasserglasklebstoffe ein Kühlpotential aufweisen, heranreichen.

Polyurethan-Klebstoffe härten unter Zugabe von Luftfeuchtigkeit und/oder Wärme aus. Ein Zweikomponenten-Polyurethan-Klebstoff härtet dagegen unabhängig von der Luftfeuchtigkeit aus. Polyurethan-Klebstoffe haben zwar den Vorteil, dass sie einen geringen Wärmedurchgangskoeffizient und damit eine geringe Wärmeleitung haben. Jedoch erhöhen die einkomponentigen und die zweikomponentigen Polyurethan-Klebstoffe in der Regel die Brandlast. Sie werden daher bei Feuerschutztüren allenfalls sparsam eingesetzt, wobei Zusatzmaßnahmen zum Brandschutz getroffen werden.

Aufgabe der Erfindung ist es, einen für eine einfache Herstellung mit eventuell auch großflächiger Verklebung von Feuerschutztüren und deren industrieller Großfertigung geeigneten Klebstoff zu schaffen.

Diese Aufgabe wird durch einen Mehrkomponentenkleber gemäß Patentanspruch 1 gelöst.

Vorteilhafte Ausgestaltungen der Erfindung sind Gegenstand der Unteransprüche.

Die Erfindung schafft einen Mehrkomponentenkleber zur Herstellung von Feuerschutzabschlüssen, wie insbesondere Feuerschutztüren,

enthaltend wenigstens eine Klebstoffkomponente, der eine im Brandfall kühlende Substanz beigemischt ist.

Zur Herstellung von Türblättern mit mehreren Schichten ist die Verwendung eines Mehrkomponentenklebers besonders vorteilhaft. In einem solchen Kleber liegen mehrere Komponenten mit unterschiedlicher Funktion nebeneinander vor. Zur Verwendung in Feuerschutzabschlüssen ist wenigstens eine Klebstoffkomponente zum Verkleben der Einzelteile des Feuerschutzabschlusses, insbesondere der Feuerschutztürblätter, vorgesehen, wobei dieser Klebstoffkomponente eine Substanz beigemischt ist, die im Brandfall kühlend wirkt.

Durch den Mehrkomponentenkleber kann ein Klebstoffsystem geschaffen werden, das zum einen hochelastisch ist und zum anderen kühlende Eigenschaften hat. Dennoch ist dieser Mehrkomponentenkleber zur Verwendung in der Fertigung von Feuerschutzabschlüssen geeignet und gegenüber den dort vorherrschenden Temperaturen stabil.

In bevorzugter Ausgestaltung lassen sich Abbindezeiten des Klebers bei wärmeforcierter Trocknung (70°C) unter 3 Minuten erreichen.

Vorteilhaft ist wenigstens eine der Klebstoffkomponenten ein Einkomponenten(1-K)-oder Zweikomponenten(2-K)-Polyurethan(PU)-Klebstoff. Polyurethan-Klebstoffe sind Klebstoffe, die im Bauwesen in großen Mengen verwendet werden, weil sie den Vorteil haben, dass sie auf vielen Materialien sehr gut kleben. Diese Klebstoffe sind günstig zu erhalten, da sie großtechnisch in großen Mengen hergestellt werden. Sie sind z.B. erhältlich als Einkomponenten-Polyurethan-Kleber, der mit der Luftfeuchtigkeit reagiert, wodurch er aushärtet. Ein ebenfalls günstig erhältlicher Zweikomponenten-Polyurethan-Kleber ist aus zwei Komponenten aufgebaut, die gemischt werden, bevor der Kleber aufgetragen wird. Der Zweikomponenten-Polyurethan-Kleber hat den Vorteil, dass er auch unabhängig von Luftfeuchtigkeit aushärtet. Polyurethan-Klebstoffe haben den weiteren Vorteil, dass sie im ausgehärteten Zustand beständig sind gegen Wasser, Öl, Benzin, Laugen und diverse Lösungsmittel und weiter dass sie unverrottbar und fäulnisresistent sind.

In besonders bevorzugter Ausgestaltung ist die im Brandfall kühlende Substanz ein kühlender Trockenstoff. Ein solcher kühlender Trockenstoff kann sehr einfach zu dem Polyurethan-Klebstoff hinzugefügt werden. Ein Trockenstoff lässt sich problemlos auch mit großem zeitlichem Abstand zu der gewünschten Aushärtung des Klebstoffes beimischen.

Vorteilhaft ist der Trockenstoff eine im Brandfall kühlende Substanz, die ausgewählt ist aus einer Gruppe, die Aluminiumhydroxid, Magnesiumhydroxid und Kieselsäure enthält. Aluminiumhydroxid (AI(OH)₃), auch ATH (Aluminiumtrihydrat) genannt, spaltet durch starkes Erhitzen Wasser ab und wirkt so kühlend und gasverdünnend. Weiter hat es eine große Effizienz als Rauchgas und Abkühlungsmittel.

Magnesiumhydroxid (Mg(OH)₂), auch bekannt als MDH (Magnesiumdihydrat), entfaltet die gleiche Wirkungsweise wie Aluminiumhydroxid, hat aber eine höhere Temperaturbeständigkeit.

Kieselsäuren, auch Kieselgele genannt, bilden poröse Aggregate mit wassergefüllten Hohlräumen. Durch den großen Wasseranteil wirken auch sie kühlend.

Vorzugsweise ist die im Brandfall kühlende Substanz mit einem Mengenanteil von maximal 50% der Klebstoffkomponente beigemischt. Dadurch wird weiterhin eine gute Klebewirkung durch die Polyurethan-Klebstoffe geschaffen, wobei dennoch ein kühlendes Material vorhanden ist, das Wärmeenergie von der mit Brand beaufschlagten Seite des Feuerabschlusses bzw. der Feuerschutztür aufnimmt.

Vorteilhaft weist eine Feuerschutztür wenigstens zwei miteinander verklebte Teilelemente auf, wobei die beiden Teilelemente mit einem Kleber zusammengeklebt sind, wie er voranstehend beschrieben worden ist. Durch die Verwendung des Mehrkomponentenklebers ist gewährleistet, dass die beiden miteinander verklebten Teilelemente fest aneinander haften, wobei die Feuerschutztür gleichzeitig durch den beigemengten Anteil der im Brandfall kühlenden Substanz eine kühlende Wirkung hat.

Vorzugsweise sind die Teilelemente plattenförmig ausgebildet und weisen auf zugewandten Breitseiten großflächig den Mehrkomponentenkleber auf. Wenn der Kleber großflächig auf den beiden plattenförmigen Teilelementen verteilt ist, ist vorteilhaft in einem großen Bereich der Feuerschutztür ein kühlendes Material vorhanden. So kann vorzugsweise erreicht werden, dass in allen Bereichen der Feuerschutztür Wärme aufgenommen werden kann.

In einem Verfahren zum Herstellen des oben beschriebenen

Mehrkomponentenklebers wird vorteilhaft wenigstens einer Klebstoffkomponente eine kühlende Trockensubstanz beigemischt. Weist der Mehrkomponentenkleber mehrere Klebstoffkomponenten auf, kann auch zwei, mehreren oder allen Klebstoffkomponenten eine kühlende Trockensubstanz beigemischt sein. Es können dabei auch mehrere Trockensubstanzen oder ein Gemisch von mehreren Trockensubstanzen beigemischt sein, um so beispielsweise vorteilhaft einen größeren Temperaturbereich abdecken zu können.

Vorzugsweise werden zwei Teilelemente eines Feuerabschlusses mit einem solchen Mehrkomponentenkleber verklebt. Damit entfaltet der Feuerabschluss eine kühlende Wirkung, wobei seine Teilelemente dennoch fest aufeinander haften und sich bei der Fertigung trotz vorherrschender Temperaturen nicht voneinander lösen.

Ein Ausführungsbeispiel der Erfindung wird nachfolgend anhand der beigefügten Zeichnungen näher erläutert. Darin zeigt:
- Fig. 1: eine Seitenansicht einer Vorrichtung zum Herstellen einer Feuerschutztür; und
- Fig. 2: einen Längsschnitt durch die gemäß Fig. 1 hergestellte Feuerschutztür.

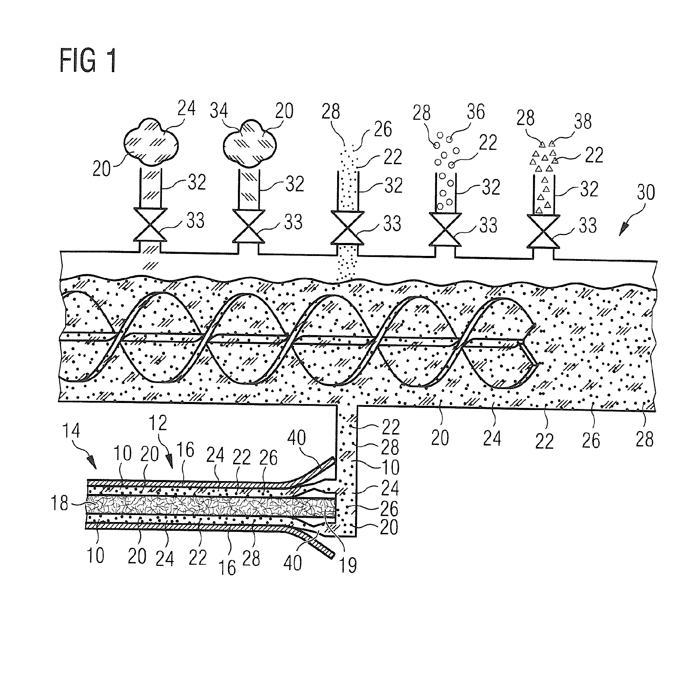

In Fig. 1 ist dargestellt, wie ein Mehrkomponentenkleber 10 zur Herstellung eines Feuerschutzabschlusses 12, insbesondere einer Feuerschutztür 14, zwischen zu verklebende Teilelemente 16, 18 eingebracht wird. Die ersten Teilelemente 16 werden von einfassenden Metallblechen, beispielsweise Stahlblechen, gebildet, das zweite Teilelement 18 ist ein isolierendes Material 19, wie z.B. ein Platte aus Gipskarton, Mineralwolle oder sonstigen Isolationsmaterialien mit Brandschutzfunktion.

Der Mehrkomponentenkleber 10 weist wenigstens eine Klebstoffkomponente 20 und wenigstens eine im Brandfall kühlende Substanz 22 auf. Fig. 1 zeigt, dass als Klebstoffkomponente 20 eine erste Polyurethankomponente 24 mit Aluminiumhydroxid 26 als kühlendem Trockenstoff 28 in einer Mischvorrichtung 30 vermengt wird. Der Anteil des Aluminiumhydroxides 26 an der Gesamtmenge des Mehrkomponentenklebers 10 beträgt maximal 50%.

In die Mischvorrichtung 30 können neben den bereits erwähnten Stoffen erste Polyurethankomponente 24 und Aluminiumhydroxid 26 über Zuleitungen 32 und Ventile 33 auch eine zweite Polyurethankomponente 34, Magnesiumhydroxid 36 und/oder Kieselsäure 38 eingebracht werden und mit einer Quirleinrichtung 39 vermengt werden.

Somit kann sowohl ein einkomponentiger Polyurethan-Klebstoff mit einer, zwei oder drei kühlenden Substanzen 22 vermengt werden, es ist aber auch möglich, einen zweikomponentigen Polyurethan-Klebstoff mit einer, zwei oder drei kühlenden Substanzen 22 zu vermengen.

Über Düsen 40 wird der so hergestellte Mehrkomponentenkleber 10 zwischen die Teilelemente 16, 18 einer Feuerschutztür 14 eingebracht.

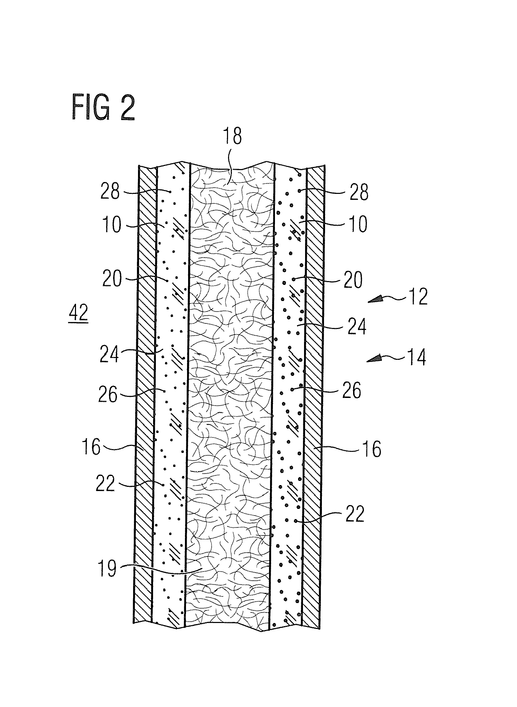

In Fig. 2 ist ein Längsschnitt durch die Feuerschutztür 14 gezeigt, die nach dem Verfahren aus Fig. 1 hergestellt worden ist. Durch Kontakt mit der Umgebungsfeuchte und/oder durch eine unterstützende Temperaturerhöhung ist der Mehrkomponentenkleber 10, der zwischen die beiden Teilelemente 16, 18 der Feuerschutztür 14 eingebracht worden ist, ausgehärtet. Der Trockenstoff 28 in Form des Aluminiumhydroxides 26 ist gleichmäßig in dem ausgehärteten Mehrkomponentenkleber 10 verteilt.

Entsteht nun auf der ersten Seite 42 der Feuerschutztür 14 ein Brand, wirkt das Aluminiumhydroxid 26 in dem Mehrkomponentenkleber 10 kühlend indem es Wärmeenergie aufnimmt. Das Polyurethan kann so besser hohen Brandtemperaturen widerstehen.

Eine Idee der Herstellung eines Mehrkomponentenklebstoffsystems kann sein, bekannten, kommerziell erhältlichen 1-K- oder 2-K-PU-Klebstoffen kühlende Trockenstoffe 28 mit einem maximalen Mengenanteil von 50% entsprechend beizumischen. Passende Trockenstoffe 28 sind hier insbesondere Aluminiumhydroxid 26, Magnesiumhydroxid 36 bzw. Kieselsäure 38.

Durch das beschriebene Mehrkomponentensystem kann ein hochelastisches Klebstoffsystem mit kühlenden Eigenschaften formuliert werden. Unter üblichen Fertigungsbedingungen sind Abbindezeiten unter wärmeforcierter Trocknung bei 70°C von < 3 Minuten gegeben.

### Bezugszeichenliste

- 10: Mehrkomponentenkleber
- 12: Feuerschutzabschluss
- 14: Feuerschutztür
- 16: erstes Teilelement
- 18: zweites Teilelement
- 19: isolierendes Material
- 20: Klebstoffkomponente
- 22: Substanz
- 24: erste Polyurethankomponente
- 26: Aluminiumhydroxid
- 28: Trockenstoff
- 30: Mischvorrichtung
- 32: Zuleitungen
- 33: Ventile
- 34: zweite Polyurethankomponente
- 36: Magnesiumhydroxid
- 38: Kieselsäure
- 39: Quirleinrichtung
- 40: Düsen
- 42: erste Seite

## Patentansprüche

1. Mehrkomponentenkleber (10) zur Herstellung von Feuerschutzabschlüssen (12), wie insbesondere Feuerschutztüren (10),
enthaltend wenigstens eine Klebstoffkomponente (20), der eine im Brandfall kühlende Substanz (22) beigemischt ist.

2. Kleber (10) nach Anspruch 1,
**dadurch gekennzeichnet,**
**dass** die wenigstens eine Klebstoffkomponente (20) eine Komponente eines 1-K-oder 2-K-PU-Klebstoffes (24, 34) ist.

3. Kleber (10) nach einem der voranstehenden Ansprüche,
**dadurch gekennzeichnet,**
**dass** die im Brandfall kühlende Substanz (22) ein kühlender Trockenstoff (28) ist.

4. Kleber (10) nach einem der voranstehenden Ansprüche,
**dadurch gekennzeichnet,**
**dass** die im Brandfall kühlende Substanz (22) ausgewählt ist aus einer Gruppe, die Aluminiumhydroxid (26), Magnesiumhydroxid (36) und Kieselsäure (38) enthält.

5. Kleber (10) nach einem der voranstehenden Ansprüche,
**dadurch gekennzeichnet,**
**dass** die Substanz (22) mit einem Mengenanteil von maximal 50% beigemischt ist.

6. Feuerschutztür (14) mit wenigstens zwei miteinander verklebten Teilelementen (16, 18),
**dadurch gekennzeichnet,**
**dass** die Teilelemente (16, 18) mit einem Kleber (10) nach einem der voranstehenden Ansprüche zusammengeklebt sind.

7. Feuerschutztür (14) nach Anspruch 6,
**dadurch gekennzeichnet,**
**dass** die Teilelemente (16, 18) plattenförmig sind und mit einander zugewandten Breitseiten großflächig mit dem Kleber (10) verklebt sind.

8. Verfahren zum Herstellen eines Klebers nach einem der Ansprüche 1 bis 5,
**dadurch gekennzeichnet,**
**dass** wenigstens einer Klebstoffkomponente (24, 34) eines Ein- oder Mehrkomponentenklebers eine kühlende Trockensubstanz (28) beigemischt wird.

9. Verfahren zum Herstellen eines Feuerschutzabschlusses (12),
enthaltend den Schritt:
Verkleben wenigstens zweier Teileelemente (16, 18) mittels eines Klebers (10) nach einem der Ansprüche 1 bis 5.
